(19) Europäisches Patentamt
European Patent Office
Office européen des brevets

(11) Veröffentlichungsnummer: **0 025 413**
**A2**

(12) # EUROPÄISCHE PATENTANMELDUNG

(21) Anmeldenummer: **80810277.6**

(22) Anmeldetag: **05.09.80**

(51) Int. Cl.³: **C 08 F 8/44**
C 08 G 85/00, A 01 N 25/10
A 01 N 43/78

(30) Priorität: **11.09.79 CH 8205/79**
**11.03.80 CH 1900/80**

(43) Veröffentlichungstag der Anmeldung:
**18.03.81 Patentblatt 81/11**

(84) Benannte Vertragsstaaten:
**AT BE CH DE FR GB IT LI NL**

(71) Anmelder: **CIBA-GEIGY AG**
**Patentabteilung Postfach**
**CH-4002 Basel(CH)**

(72) Erfinder: **d'Hondt, Christian, Dr.**
**Unterm Schellenberg 162**
**CH-4125 Riehen(CH)**

(72) Erfinder: **Lohmann, Dieter, Dr.**
**Unterwartweg 49**
**CH-4132 Muttenz(CH)**

(72) Erfinder: **Neuenschwander, Ernst, Dr.**
**Moosweg 20**
**CH-4125 Riehen(CH)**

(54) **Salze von 3-Methyl-2-(2',4'-dimethyl-phenylimino)-4-thiazolin mit sulfonsäuregruppenhaltigen Polymeren, und ihre Verwendung in der Schädlingsbekämpfung.**

(57) Salze von 3-Methyl-2-(2',4'-dimethyl-phenylimino)-4-thiazolin mit sulfonsäuregruppenhaltigen Polymeren, Verfahren zu ihrer Herstellung und ihrer Verwendung in der Schädlingsbekämpfung.

EP 0 025 413 A2

Croydon Printing Company Ltd.

CIBA-GEIGY AG
Basel (Schweiz)

5-12506/1+2/ZFO/+

siehe Titelseite

Salze von 3-Methyl-2-(2',4'-dimethyl-phenylimino)-4-thiazolin mit sulfonsäuregruppenhaltigen Polymeren, Verfahren zu ihrer Herstellung und ihre Verwendung in der Schädlingsbekämpfung

Die vorliegende Erfindung betrifft Salze von 3-Methyl-2-(2',4'-dimethyl-phenylimino)-4-thiazolin mit sulfonsäuregruppenhaltigen Polymeren, Verfahren zu ihrer Herstellung und ihre Verwendung in der Schädlingsbekämpfung.

Gegenstand der Erfindung sind Salze der Formel

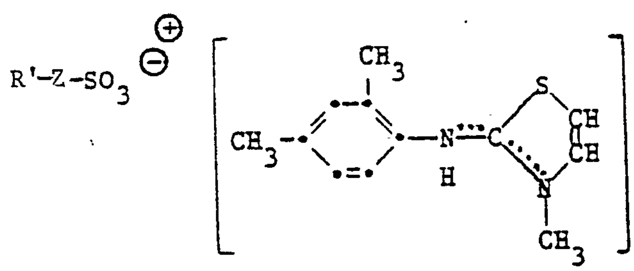

(I)

worin Z die direkte Bindung oder ein Brückenglied und R' ein Polymeres bedeuten und der Anteil des Kations mindestens 5 %, bezogen auf die Anzahl der wiederkehrenden Strukturelemente des Polymeren, beträgt.

Bevorzugte Brückenglieder bei Z sind u.a. Sauerstoff oder

geradkettiges oder verzweigtes Alkylen mit 1 - 4 C-Atomen, gegebenenfalls durch Halogenatome, Alkyl- oder Alkoxygruppen mit 1-4 C-Atomen oder durch $-SO_3^{\ominus}M^{\oplus}$ substituiertes Phenylen oder Naphthylen, $-CH_2O-CH_2CH_2-$, $-CH_2OCH_2CH_2O-$, $-CH_2SCH_2CH_2-$, $-CH_2-S-CH_2CH_2O-$, eine gegebenenfalls durch Halogenatome, Alkyl- oder Alkoxygruppen mit 1-4 C-Atomen ringsubstituierte Gruppe

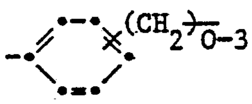

, eine gegebenenfalls durch $-SO_3^{\ominus}M^{\oplus}$ substituierte Gruppe

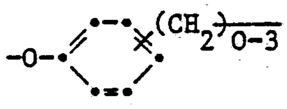

oder

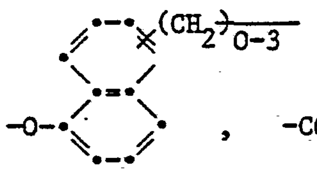

, $-COOR_1-$ oder $-CON(R_2)(R_3)-$,

$R_1$ geradkettiges oder verzweigtes und gegebenenfalls durch Chlor- oder Bromatome substituiertes oder durch ein Sauerstoffatom unterbrochenes Alkylen mit 3-8 C-Atomen, Cyclohexylen, Phenylen, Naphthylen, durch eine Gruppe $-SO_3^{\ominus}M^{\oplus}$ substituiertes Naphthylen, $C_{2-4}$-Alkylen-O-Phenylen oder

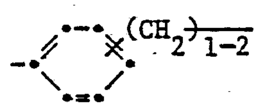

,

$R_2$ die direkte Bindung, gegebenenfalls durch ein Sauerstoffatom unterbrochenes geradkettiges oder verzweigtes Alkylen mit 1-6 C-Atomen, geradkettiges oder verzweigtes Oxyalkylen mit 1-6 C-Atomen, Phenylen, Naphthylen, durch $-SO_3^{\ominus}M^{\oplus}$ substituiertes Naphthylen, $C_{1-4}$-Alkylen-O-Phenylen,

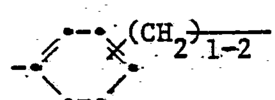

oder

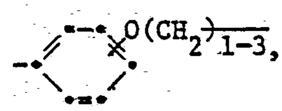

,

$R_3$ Wasserstoff oder $C_{1-6}$-Alkyl.

Bei den Polymeren handelt es sich z.B. um Polyester, Polyesteramide, Polyamide, Polyimide, Polyamidimide, Polyesterimide, Polyäther, Polyurethane, Polyharnstoffe, Polykondensationsprodukte von Phenol, Naphtholen, Melamin und/oder Harnstoff mit Aldehyden oder Ketonen, wie z.B. Formaldehyd, Polysaccharide, Gelatine, Organopolysiloxane, Polyphosphacene, Polymere, welche durch Homo- oder Copolymerisation von Mehrfachbindungen, wie z.B. C=C-Doppelbindungen, enthaltenden Monomeren oder durch ringöffnende Polymerisation von gesättigten oder ungesättigten und gegebenenfalls Heteroatome enthaltenden aliphatischen Ringen erhalten werden. Darüberhinaus können auch sulfonsäuregruppenhaltige Gerbstoffe oder Polymere verwendet werden, die durch Abbau- oder Umwandlungsreaktionen aus natürlichen Stoffen, wie Cellulose, Lignin oder Chitin und dergleichen erhalten werden.

Die Polymeren können linear, verzweigt oder vernetzt sein. Handelt es sich dabei um lineare Polymere, so weisen diese zweckmässig ein Durchschnittsmolekulargewicht von mindestens 500 auf.

Bevorzugte Klassen von linearen Polymeren sind: lineare Polymerisationsprodukte mit einem Durchschnittsmolekulargewicht von etwa 500 bis etwa 2'000'000, insbesondere von etwa 1000 bis etwa 200'000; lineare Polykondensationsprodukte mit einem Durchschnittsmolekulargewicht von etwa 500 bis 60'000, insbesondere von etwa 1000 bis etwa 30'000; lineare Polyadditionsprodukte mit einem Durchschnittsmolekulargewicht von etwa 1000 bis etwa 40'000, insbesondere von etwa 2000 bis etwa 20'000; durch ringöffnende Polymerisation erhaltene lineare Produkte mit einem Durchschnittsmolekulargewicht von etwa 500 bis etwa 40'000, insbesondere etwa 1000 bis etwa 20'000; Abbau- und Umwandlungsprodukte von natürlichen Stoffen mit einem Durchschnittsmolekulargewicht von etwa 500 bis etwa 2'000'000, insbesondere von etwa 1000 bis etwa 100'000.

Die Bestimmung der Durchschnittsmolekulargewichte erfolgt nach

an sich bekannten Methoden, im allgemeinen mittels Dampfdruckosmometrie, Lichtstreuung oder Viskositätsmessung.

Von besonderer Bedeutung sind Salze der Formel

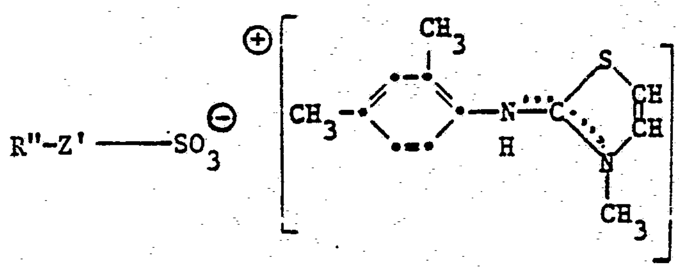 (II)

worin R" ein Polymerglied der Formel 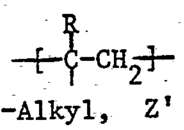,
R Wasserstoff, Chlor, -CN oder $C_1$-$C_4$-Alkyl, Z' die direkte Bindung, -O-, geradkettiges oder verzweigtes Alkylen mit 1-4 C-Atomen, gegebenenfalls durch Halogenatome, Alkyl- oder Alkoxygruppen mit 1-4 C-Atomen oder durch $-SO_3^{\ominus}M^{\oplus}$ substituiertes Phenylen oder Naphthylen, $-CH_2O-CH_2CH_2-$, $-CH_2OCH_2CH_2O-$, $-CH_2SCH_2CH_2-$, $-CH_2-S-CH_2CH_2O-$, eine gegebenenfalls durch Halogenatome, Alkyl- oder Alkoxygruppen mit 1-4 C-Atomen ringsubstituierte Gruppe

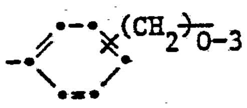, eine gegebenenfalls durch $-SO_3^{\ominus}M^{\oplus}$ substituierte

Gruppe 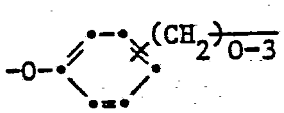

oder

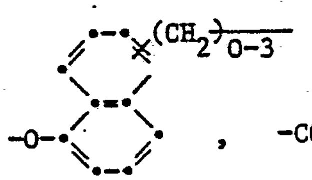, $-COOR_1-$ oder $-CON(R_2)(R_3)-$,

$R_1$ geradkettiges oder verzweigtes und gegebenenfalls durch Chlor- oder Bromatome substituiertes oder durch ein Sauerstoffatom unterbrochenes Alkylen mit 3-8 C-Atomen, Cyclohexylen, Phenylen, Naphthylen, durch $-SO_3^{\ominus}M^{\oplus}$ substituiertes Naphthylen, $C_{2-4}$-Alkylen-O-Phenylen oder 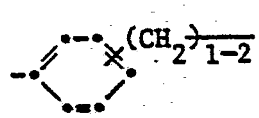,

$R_2$ die direkte Bindung, gegebenenfalls durch ein Sauerstoffatom unterbrochenes geradkettiges oder verzweigtes Alkylen mit 1-6 C-Atomen, geradkettiges oder verzweigtes Oxyalkylen mit 1-6 C-Atomen, Phenylen, Naphthylen, durch $-SO_3^{\ominus}M^{\oplus}$ substituiertes Naphthylen,

$C_{1-4}$-Alkylen-O-Phenylen, 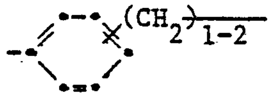 oder 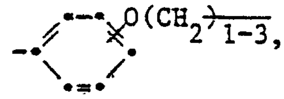,

$R_3$ Wasserstoff oder $C_{1-6}$-Alkyl und $M^{\oplus}$ Wasserstoff oder

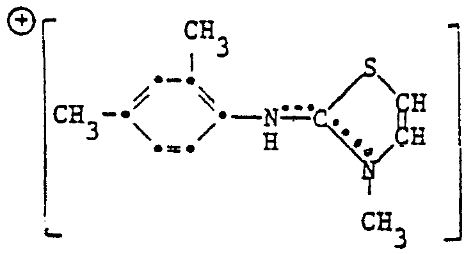

bedeuten, und wobei der Anteil des Kations mindestens 5 % und bevorzugt 30-100 %, bezogen auf die Anzahl der wiederkehrenden Strukturelemente des Polymeren, beträgt.

Bevorzugte Polymere dieser Art sind: lineare Polymere mit einem Durchschnittsmolekulargewicht von etwa 500 bis 2'000'000, die wiederkehrende Strukturelemente der Formel III

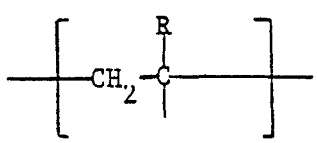

(III)

aufweisen, worin R die oben angegebene Bedeutung hat und der Anteil an wiederkehrenden Strukturelementen der Formel III 0,5 bis 95 %, bezogen auf die Anzahl der wiederkehrenden Strukturelemente des Polymeren, beträgt;

Polymere mit wiederkehrenden Strukturelementen der Formel II, wiederkehrenden Strukturelementen der Formel IV

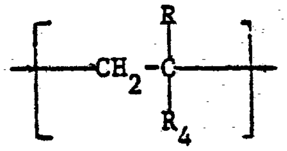 (IV),

worin R Wasserstoff, Chlor, -CN oder $C_{1-4}$-Alkyl, $R_4$ Wasserstoff, Halogen, $-CON(R_5)(R_6)$, -COOH, $-COO^{\ominus}Me^{\oplus}$, gegebenenfalls durch Chlor substituiertes Phenyl, Alkyl, Alkoxy oder Alkenyl mit bis zu 4 C-Atomen, Cyclohexyl, -COO-Alkyl mit 1-12 C-Atomen im Alkyl, $-COO(CH_2)_x-OH$, -COO-Phenyl, -OCOAlkyl mit 1-4 C-Atomen im Alkyl, -OCOPhenyl, -CO-Alkyl mit 1-4 C-Atomen im Alkyl, Phenoxy oder eine Gruppe

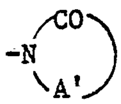, Me ein einwertiges Metall, x eine ganze Zahl von 2-6,

A' $-(CH_2)_3-$, $-(CH_2)_5$, $-CO-(CH_2)_2-$, -CO-CH=CH- oder

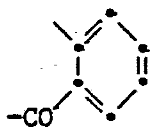, $R_5$ Wasserstoff, $C_{1-4}$-Alkyl, $C_{1-6}$-Hydroxyalkyl oder Phenyl und $R_6$ Wasserstoff oder $C_{1-4}$-Alkyl bedeuten, und gegebenenfalls Strukturelementen der Formel III, wobei der Anteil an wiederkehrenden Strukturelementen der Formeln III und IV zusammen 0,5 bis 95 %, bezogen auf die Anzahl der wiederkehrenden Strukturelemente des Polymeren, beträgt;

vernetzte Polymere mit wiederkehrenden Strukturelementen der Formel II, wiederkehrenden Strukturelementen der Formel V

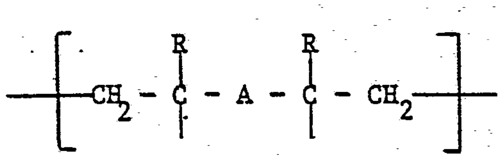 (V),

worin R Wasserstoff, Chlor, -CN oder $C_{1-4}$-Alkyl,

A die direkte Bindung, -O-, $-SO_2-$, 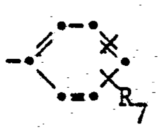, -COO-, $-COOCH_2-$,

-CONH-, $-CONHCH_2-$, $Me^{2+}(^{-}OOC)_2^{-}$, $Me^{3+}(^{-}OOC)_2(-OOC-CR-CH_2)-$,

$-CONH(CH_2)_yNHCO-$, $-COO(CH_2)_x-OCO-$ oder $-COO(CH_2)_2[O-(CH_2)_2]_{1-3}OCO-$,

$R_7$ Wasserstoff, Aethyl, $-SO_3H$ oder $-SO_3^{\ominus}$ $\oplus$ 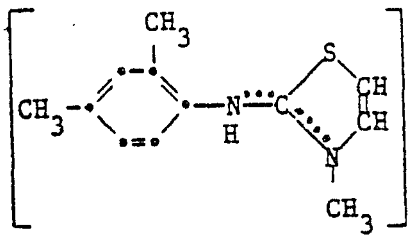

Me ein zwei- bzw. dreiwertiges Metall, y eine ganze Zahl von 1-6 und x eine ganze Zahl von 2-6 bedeuten und gegebenenfalls wiederkehrenden Strukturelementen der Formel III und/oder IV, wobei der Anteil an wiederkehrenden Strukturelementen der Formel V 0,2-20 % und der Anteil an wiederkehrenden Strukturelementen der Formel III und/oder IV zusammen höchstens 94,5 %, bezogen auf die Anzahl der wiederkehrenden Strukturelemente des Polymeren, betragen.

In den obigen Formeln durch R, $R_3$, $R_4$, $R_5$ und $R_6$ dargestellte Alkyl- bzw. Hydroxyalkylgruppen, durch $R_4$ dargestellte Alkenylgruppen sowie Alkyl- und Alkoxysubstituenten in Gruppen Z und $R_4$ können geradkettig oder verzweigt sein, sind aber bevorzugt geradkettig. Alkylgruppen R, $R_5$ und $R_6$ sowie Alkyl- oder Alkoxysubstituenten in Gruppen Z weisen vorzugsweise 1 oder 2 C-Atome auf. Sind Gruppen Z durch Halogenatome substituiert, so handelt es sich dabei besonders um Chlor- oder Bromatome. Alkylengruppen $R_1$ und $R_2$ sind bevorzugt unsubstituiert und weisen 3-5 bzw. 1-5 C-Atome auf. Alkylengruppen $R_4$ und Hydroxyalkylgruppen $R_5$ weisen mit Vorteil 1-4 C-Atome auf.

Als Beispiele von ein- bis dreiwertigen Metallen Me seien erwähnt: Na, K, Ba, Mg, Ca und Al.

Bevorzugt sind Salze des Kations der Formel

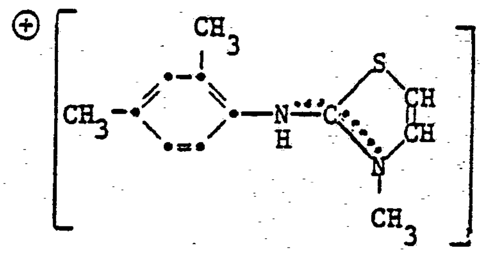

mit einem Anion aus den Gruppen der Polyvinylsulfonsäuren, Polystyrolsulfonsäuren, Poly[N-(sulfoalkyl)acrylamide] und sulfonierten Kationenaustauschern aus Styrol und etwa 8-12 Gew. % Divinylbenzol (Vernetzer), oder sulfonierten Kationenaustauschern mit makroporösen Strukturen.

Eine weitere Klasse bevorzugter Polymeren sind solche, die aus wiederkehrenden Strukturelementen der Formeln VIa bis VIe

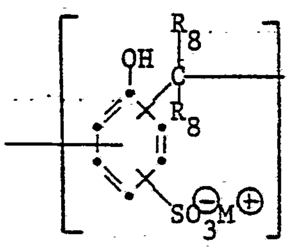

,

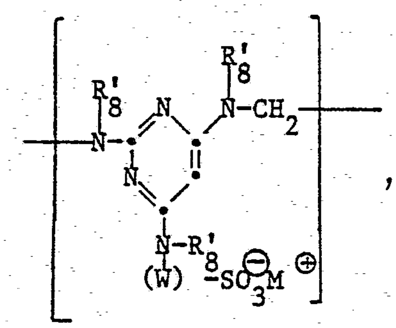

,

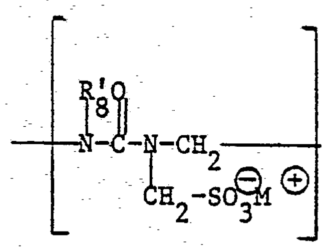

VIa VIb VIc

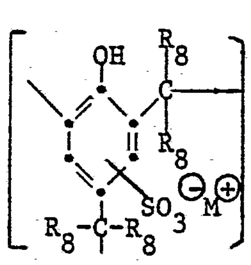

oder

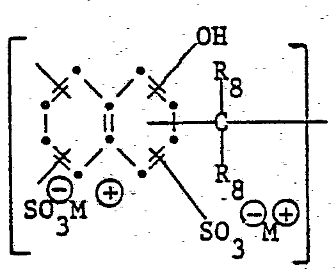

VId VIe

oder Gemischen davon bestehen, worin $R_8$ und $R_8'$ je Wasserstoff oder Methyl

W $(CH_2)_{1-4}$ 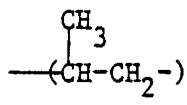 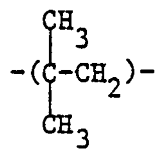 oder 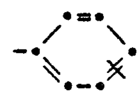

und $M^{\oplus}$ Wasserstoff oder die Gruppe

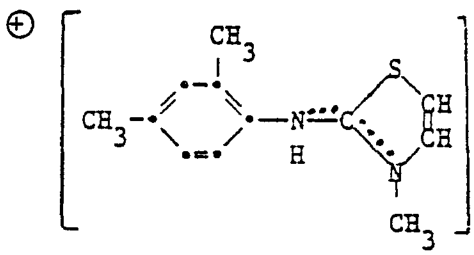 bedeuten,

wobei der Anteil des Kations $M^{\oplus}$ ungleich Wasserstoff mindestens 5 % und bevorzugt 30 - 100 %, bezogen auf die Anzahl der wiederkehrenden Strukturelemente des Polymeren beträgt.

Unter den Polymeren mit Strukturelementen der Formeln II bis VIe haben diejenigen eine besondere Bedeutung, die ionenaustauschende Eigenschaften aufweisen. Auf Grund ihrer grossen inneren Oberfläche und ihrer hohen Kapazität für die Salzbildung mit dem Wirkstoff und die ausreichende Wirkstoff-Freisetzung unter biologischen Bedingungen erweisen sich Polymerharze mit makroporöser Struktur als besonders geeignet.

Ferner sind lineare Polykondensationsprodukte mit einem Durchschnittsmolekulargewicht von etwa 500 bis etwa 60 000 bevorzugt, die aus wiederkehrenden Strukturelementen der Formel VII

$$-\!\!\left[ Y_1 - L - Y_2 - Q \right]\!\!- \qquad \text{(VII)}$$

bestehen, worin L eine Gruppe 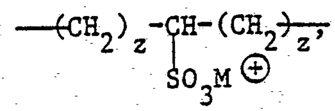 , 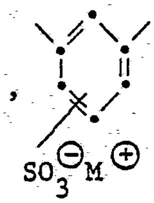

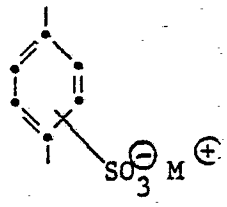 oder 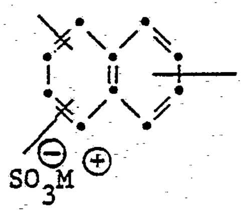 ,

z die Zahl 1 oder 2, z' Null, die Zahl 1 oder 2, $M^{\oplus}$ Wasserstoff

oder die Gruppe 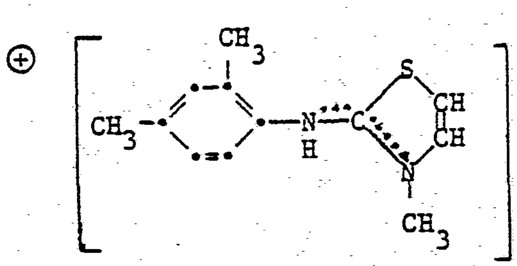 , $Y_1$ und $Y_2$ unabhängig voneinander -OCO-, -COO-, -CONH-, -OCONH-, oder -NHCONH-, Q gegebenenfalls verzweigtes oder durch -O- oder $-NR_8-$ unterbrochenes Alkylen mit 2-10 C-Atomen, gegebenenfalls durch Halogenatome, Methyl-, Methoxy- oder $-SO_3^{\ominus}M^{\oplus}$-Gruppen substituiertes Phenylen oder Naphthylen, Cyclohexylen,

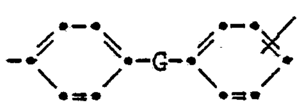 , 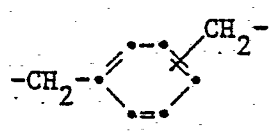 , 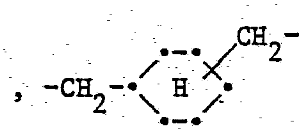

oder 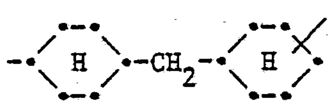

und G die direkte Bindung, -O-, $-CH_2-$, $-\overset{|}{C}(CH_3)_2$ oder $-SO_2-$ bedeuten, wobei der Anteil des Kations $M^{\oplus}$ ungleich Wasserstoff mindestens 5 % und bevorzugt 30 - 100 %, bezogen auf die Anzahl der wiederkehrenden Strukturelemente des Polymeren, beträgt.

Die erfindungsgemässen Salze lassen sich grundsätzlich nach drei an sich bekannten Methoden herstellen, indem man

a) ein gegebenenfalls vernetztes oder verzweigtes Polymeres, das seitenständige, direkt oder über ein Brückenglied an das Polymerrückgrat gebundene Gruppen $-SO_3H$ aufweist, wobei der Anteil dieser Gruppen mindestens 5 %, bezogen auf die Anzahl der wiederkehrenden Strukturelemente des Polymeren, beträgt, mit einer Verbindung der Formel VIII

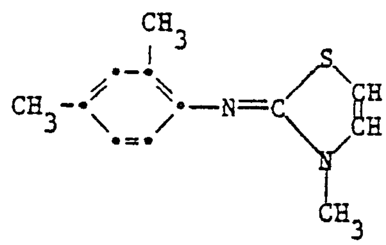

(VIII),

zur Reaktion bringt,

b) ein Monomeres, welches direkt oder über ein $-COOCH_2-$ Brückenglied gebundene $-SO_3H$-Gruppen enthält, zuerst mit einer Verbindung der Formel VIII zur Reaktion bringt und das erhaltene Monomersalz anschliessend, gegebenenfalls in Gegenwart von Comonomeren und/oder Vernetzungsmitteln, in ein Polymeres überführt, wobei das Molverhältnis von Monomersalz zu Comonomeren und/oder Vernetzungsmitteln 1:19 bis 1:0 beträgt, oder

c) ein Polymeres, welches reaktive Gruppen, wie z.B. das Anhydrid-, Säurechlorid-, Ester-, Isocyanat- oder Epoxidgruppen enthält, mit mindestens 5 %, bezogen auf die Anzahl der wiederkehrenden Strukturelemente des Polymeren, einer Verbindung der Formel IXa oder IXb

$H_2N-Z_1-SO_3$ ⊖⊕ , 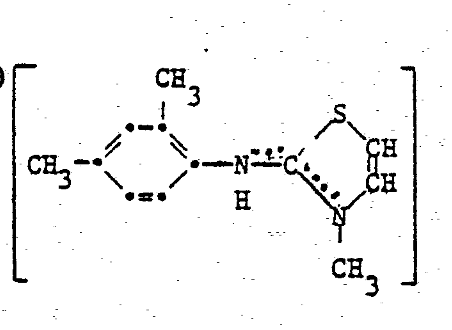 (IXa)

$HO-Z_2-SO_3$ ⊖⊕ 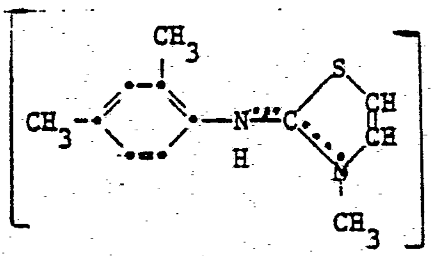 (IXb),

worin $Z_1$ die direkte Bindung, geradkettiges oder verzweigtes, gegebenenfalls durch Chlor oder Brom substituiertes oder durch ein Sauerstoffatom unterbrochenes Alkylen mit 1-8 C-Atomen, Cyclohexylen oder gegebenenfalls durch eine Gruppe $-SO_3\ M^{\oplus}$ substituiertes Phenylen oder Naphthylen und $Z_2$ die direkte Bindung, geradkettiges oder verzweigtes und gegebenenfalls durch Chlor oder Brom substituiertes Alkylen mit 3-8 C-Atomen, Cyclohexylen, gegebenenfalls durch eine Gruppe $-SO_3M^{\oplus}$ substituiertes Phenylen oder Naphthylen,

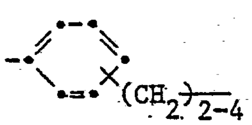 oder 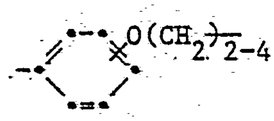 und $M^{\oplus}$ Wasserstoff

oder

⊕ 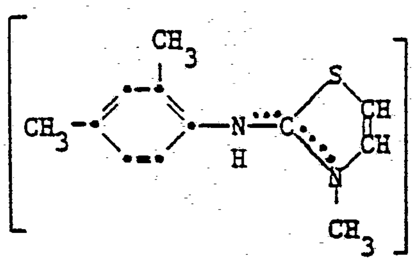 bedeuten, zur Reaktion bringt.

Die obigen Umsetzungen erfolgen zweckmässig in Gegenwart eines geeigneten inerten Lösungsmittels, wie Dioxan, Chloroform, $CH_2Cl_2$,

Tetrahydrofuran, Aethanol, Methanol und dgl. Die Umsetzung kann in homogener Lösung, in Dispersion oder Suspension vorgenommen werden. Die Salzbildung wird im allgemeinen bei einer Temperatur zwischen etwa 25 und 80°C vorgenommen. Die Fixier-Ausbeute kann mit üblichen analytischen Methoden, wie Elementaranalyse, Dünnschicht- und Gaschromatographie bestimmt werden. Die Ueberführung der Monomersalze in die entsprechenden Polymeren wie auch die Umsetzung der Salze der Formeln IXa oder IXb mit den definitionsgemässen Polymeren gemäss Verfahrensvariante c) erfolgen je nach Art des Monomeren bzw. Polymeren, z.B. durch Polymerisation, Polykondensation oder Polyaddition auf an sich bekannte Weise und unter Verwendung üblicher Lösungsmittel, Katalysatoren und/oder Polymerisationsinitiatoren.

Die erfindungsgemäss zu verwendenden Polymeren werden analog den im Vorangehenden beschriebenen Verfahren zweckmässig dadurch hergestellt, dass man

a) ein Polymeres, das wiederkehrende Strukturelemente der Formel III

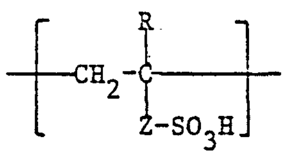

(III)

aufweist, mit einer Verbindung der Formel VIII zur Reaktion bringt oder

b) ein Monomeres der Formel IIa

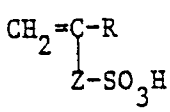

(IIa)

zuerst mit einer Verbindung der Formel VIII zur Reaktion bringt und das erhaltene Monomersalz der Formel IIb

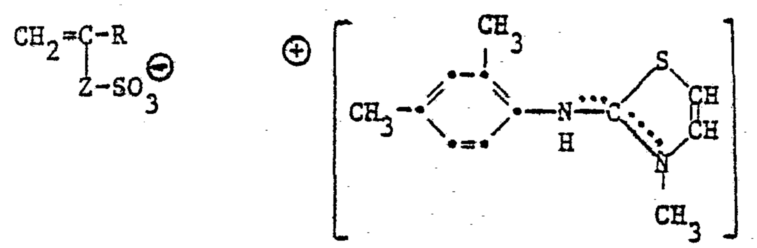

(IIb)

gegebenenfalls in Gegenwart von Comonomeren und/oder Vernetzungsmitteln polymerisiert, wobei das Molverhältnis von Verbindungen der Formel IIb zu Comonomeren und/oder Vernetzungsmitteln 1:19 bis 1:0 beträgt, und für R und Z das oben Angegebene gilt.

Polymersalze mit einem Durchschnittsmolekulargewicht von etwa 500 bis etwa 2 000 000, können z.B. dadurch hergestellt werden, dass man ein Polymeres, das aus wiederkehrenden Strukturelementen der Formel III besteht, in einem Verhältnis von 20:1 bis 100:99,5, bezogen auf die Anzahl der wiederkehrenden Strukturelemente des Polymeren, mit einer Verbindung der Formel VIII zur Reaktion bringt oder dass man ein Monomersalz der Formel IIb in einem Mol-Verhältnis von 1:19 bis 199:1 mit einem Comonomeren der Formel IIa polymerisiert. Polymersalze können auch dadurch erhalten werden, dass man ein Polymeres, das aus wiederkehrenden Strukturelementen der Formel III und 0,5 bis 95 % wiederkehrenden Strukturelementen der Formel IV besteht, in einem Verhältnis von 20:1 bis 100:99,5, bezogen auf die Anzahl der wiederkehrenden Strukturelemente der Polymeren, mit einer Verbindung der Formel VIII zur Reaktion bringt oder dass man ein Salz der Formel IIb in einem Mol-Verhältnis von 1:19 bis 199:1 mit einem Comonomeren der Formel IVa

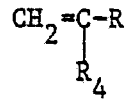

und gegebenenfalls einem Comonomeren der Formel IIa polymerisiert.

Schliesslich können Polymersalze dadurch hergestellt werden, dass man entweder ein Polymeres, das aus wiederkehrenden Strukturelementen der Formel III, 0,5 - 20 % wiederkehrenden Strukturelementen der Formel V und gegebenenfalls 75 - 94,5 % wiederkehrenden Strukturelementen der Formel IV besteht, in einem Verhältnis von 20:1 bis 100:99,5 bezogen auf die Anzahl der wiederkehrenden Strukturelemente des Polymeren, mit einer Verbindung der Formel VIII zur Reaktion bringt oder ein Monomersalz der Formel IIb in einem Mol-Verhältnis von 1:19 bis 199:1 mit einem Vernetzungsmittel der Formel Va

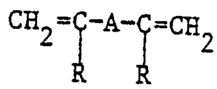 (Va)

und gegegebenenfalls einem Comonomeren der Formel IVa und/oder einem Comonomeren der Formel IIa polymerisiert.

Polymersalze lassen sich ebenfalls dadurch herstellen, dass man

a) ein Polymeres, das aus wiederkehrenden Strukturelementen der Formeln VIa' bis VIe'

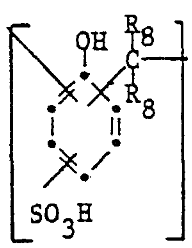 , 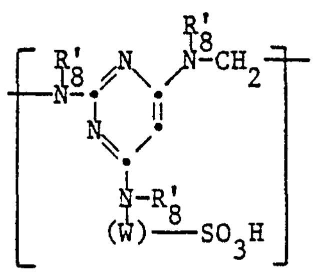 , 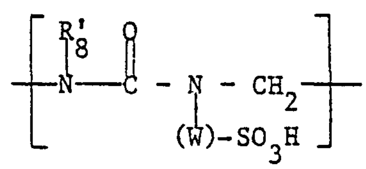 ,

(VIa') (VIb') (VIc')

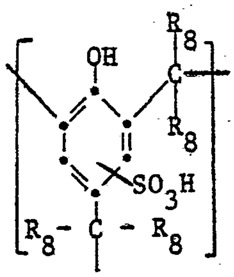

oder

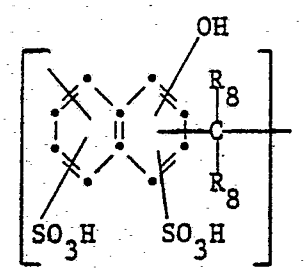

(VId') (VIe')

oder Gemischen davon besteht, in einem Verhältnis von 20:1 bis 1:1, bezogen auf die Anzahl der wiederkehrenden Strukturelemente der Formeln VIa, VIb, VIc, VId und VIe, einer Verbindung der Formel VIII zur Reaktion bringt oder

b) eine Verbindung der Formel VIa", VIb", VIc" oder VIe"

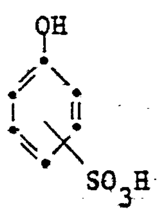 , (VIa")

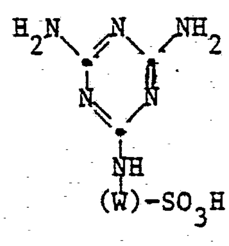 , (VIb")

$NH_2CO-NH-(W)\ SO_3H$ (VIc")

oder

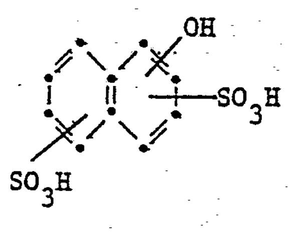

(VIe")

oder ein Gemisch solcher Verbindungen zuerst mit einer Verbindung der Formel VIII zur Reaktion bringt und anschliessend das erhaltene Monomersalz der Formel VIa"', VIb"', VIc oder VIe"'

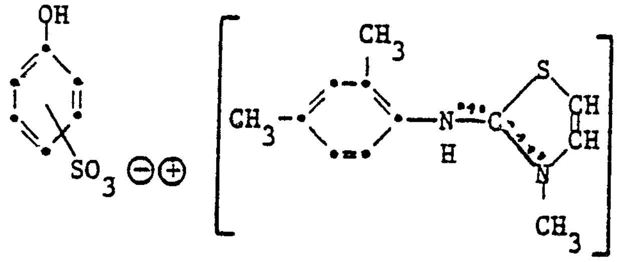

(VIa''')

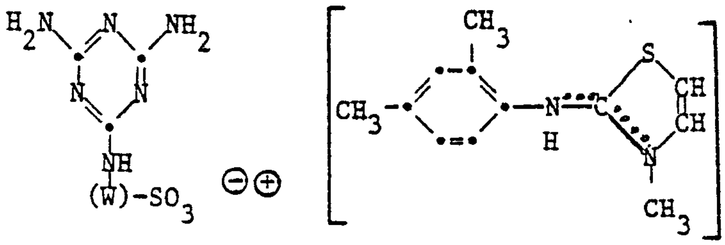

(VIb''')

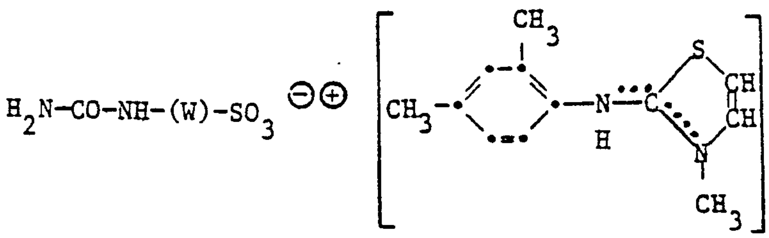

(VIc''')

oder

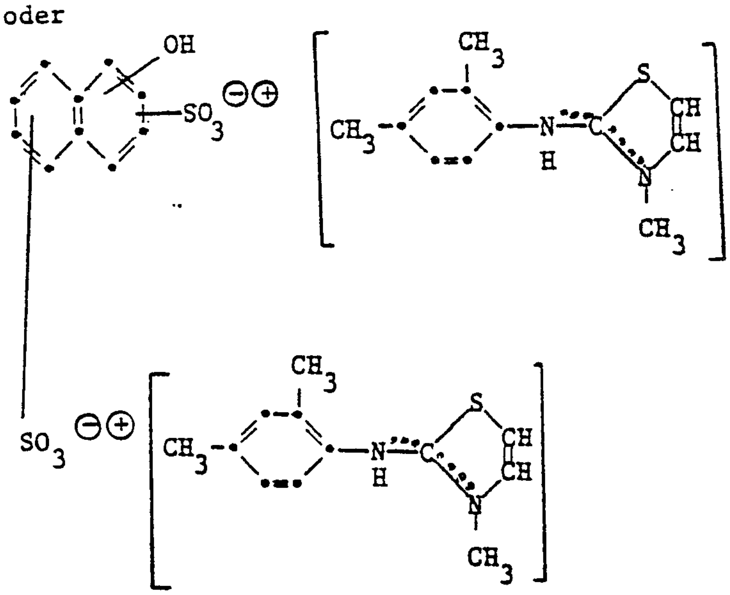

(VIe''')

oder das erhaltene Gemisch solcher Monomersalze gegebenenfalls in Gegenwart von Phenol und/oder einer Verbindung der Formel VIa" , VIb" , VIc" oder VIe" mit einer Verbindung der Formel X

$$R_8 - \overset{\overset{\displaystyle R_8}{|}}{C} = O \qquad (X)$$

polykondensiert, wobei für $R_8$ und (W) das oben Angegebene gilt und das Molverhältnis von Monomersalz der Formeln VIa"', VIb"', VIc"' und/oder VIe"' zu Verbindung der Formel VIa"', VIb"', VIc", VIe" und/oder Phenol 1:19 bis 1:0 beträgt.

Polymersalze, die aus Strukturelementen der Formel VII bestehen, werden zweckmässig dadurch hergestellt, dass man

a) ein Polymeres, das aus wiederkehrenden Strukturelementen der Formel VIIa

$$-\!\!\left[ Y_1 - L_1 - Y_2 - Q \right]\!\!- \qquad (VIIa)$$

besteht, in einem Verhältnis von 20:1 bis 1:1, bezogen auf die Anzahl der wiederkehrenden Strukturelemente des Polymeren, mit einer Verbindung der Formel VIII zur Reaktion bringt oder

b) eine Verbindung der Formel VIIb

$$Y_3 - L_1 - Y_4 \qquad (VIIb)$$

zuerst mit einer Verbindung der Formel VIII zur Reaktion bringt und anschliessend das erhaltene Monomersalz der Formel VIIc

$$Y_3 - L_2 - Y_4 \qquad (VIIc)$$

gegebenenfalls in Gegenwart einer Verbindung der Formel VIIb mit einer Verbindung der Formel VIId

$$Y_5 - Q - Y_6 \qquad \text{(VIId)}$$

polykondensiert oder polyaddiert, wobei

$L_1$ eine Gruppe 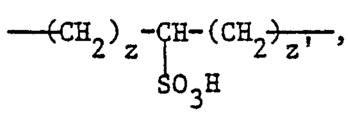, 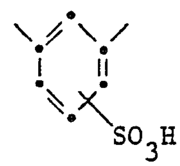, 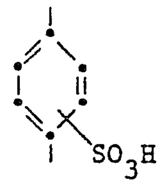

oder 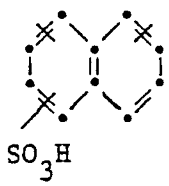

$L_2$ eine Gruppe

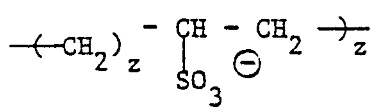 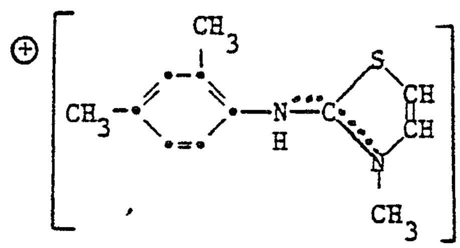

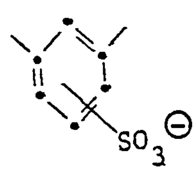 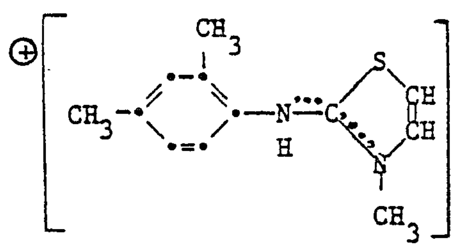,

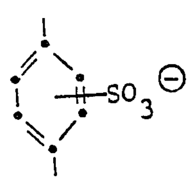 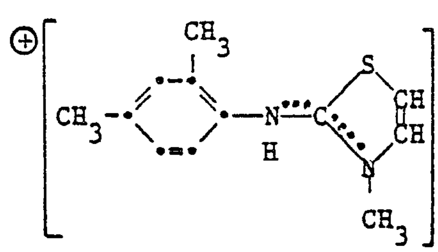 oder

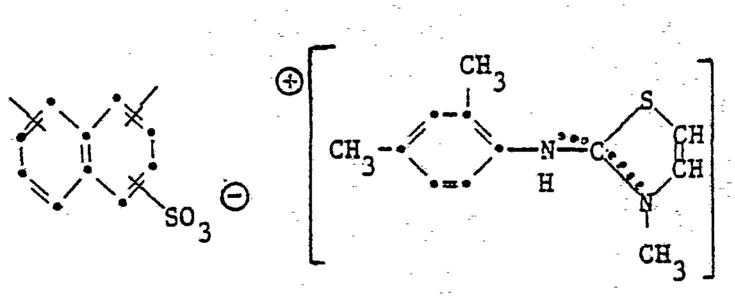

$Y_3$ und $Y_4$ unabhängig voneinander -OH, $-NH_2$, -COCl, -COOH, -COOPhenyl oder -COOAlkyl mit 1-3 C-Atomen im Alkyl und $Y_5$ und $Y_6$, wenn $Y_3$ und/oder $Y_4$ -OH oder $-NH_2$ sind, unabhängig voneinander -COCl, -COOH, -COOPhenyl, -COOAlkyl mit 1-3 C-Atomen im Alkyl oder -NCO und, wenn $Y_3$ und/oder $Y_4$ -COCl, -COOH, -COOAlkyl mit 1-3 C-Atomen im Alkyl oder -COOPhenyl sind, unabhängig voneinander -OH oder $-NH_2$ darstellen, wobei $Y_1$ und $Y_2$ das oben Angegebene gilt und das Molverhältnis von Verbindung der Formel VIIc zu Verbindungen der Formel VIIb 1:19 bis 1:0 beträgt.

Die für die obigen Umsetzungen zu verwendenden Reaktionskomponenten sind bekannt oder können nach an sich bekannten Methoden hergestellt werden. Polymere mit definitionsgemäss gebundenen seitenständigen $-SO_3H$-Gruppen können beispielsweise wie folgt hergestellt werden:

1) Durch Einführung der $-SO_3H$-Gruppen in eine bestehende, lineare verzweigte oder vernetzte Polymerkette durch Substitutions-, Kondensations- oder Addtionsreaktionen, z.B. durch Sulfonierung mit $SO_3$, $H_2SO_4$ u.ä., Sulfochlorierung, Sulfomethylierung, Sulfoäthylierung mit Vinylsulfonsäuren, Sulfoalkylierung mit Sulfonen oder Natriumbisulfit-Additon an Doppelbindungen, beispielsweise an Polyäthylenfumerat oder Butadien-Polymere; oder durch Umsetzen von Polymeren mit reaktiven Gruppen, wie Anhydrid-, Säurechlorid-, Ester-, Isocyanat- oder Epoxidgruppen, z.B. Polyacrylsäurechlorid, -methylester oder -glycidylester, mit funktionellen Sulfonsäuren oder funktionellen Polysulfonsäuren, die Hydroxy- oder Aminogruppen tragen, oder durch Umsetzung von HO- oder HN-haltigen Polymeren mit cyclischen Sulfonen.

2) Durch Aufbau der Polymerkette aus Monomeren, welche die $-SO_3H$-Gruppe in freier oder verkappter Form, z.B. als Salz, enthalten, wobei die Polymerkette durch Polymerisation, Polyaddition, Polykondensation oder ringöffnende Polymerisation aufgebaut werden kann, gegebenenfalls in Gegenwart von geeigneten Comonomeren und/oder Vernetzungsmitteln. Beispiele für den Aufbau der Polymerkette aus geeigneten Monomeren sind insbesondere die Homo- und Copolymerisation von polymerisierbaren Sulfonsäuren, gegebenenfalls in Gegenwart von Vernetzungsmitteln, wie sie z.B. in den US-Patentschriften 2.983.712 und 2.914.499 sowie den deutschen Auslegeschriften 1.224.506 und 1.292.129 beschrieben sind; durch Polykondensation von sulfonsäuregruppenhaltigen Diolen, Diaminen, Aminoalkoholen, Dicarbonsäuren und Derivaten davon oder Diisocyanaten mit geeigneten Co-Kondensationskomponenten; die Polykondensation von Sulfonsäuren aromatischer Hydroxyverbindungen, z.B. Phenolsulfonsäuren, mit Aldehyden oder Ketonen, wie Formaldehyd.

Ferner können als Ausgangspolymere sulfatierte oder sulfoalkylierte Polysaccharide, wie Cellulose, Amylose und dergleichen, Ligninsulfonsäuren oder sulfoalkylierte Proteine verwendet werden, die sich auf an sich bekannte Weise herstellen lassen.

Beispiele für bei der Verfahrensvariante b) einzusetzende Monomere sowie für allenfalls mitzuverwendende Comonomere und Vernetzungsmittel finden sich in den oben erwähnten US-Patentschriften und deutschen Auslegeschriften. Salze der Formel IXa und IXb können nach üblichen Methoden durch Umsetzen der entsprechenden Amino- oder Hydroxysulfonsäuren mit Verbindungen der Formel VIII hergestellt werden.

Die Salze der Formel I eignen sich zur Bekämpfung von verschiedenartigen tierischen und pflanzlichen Schädlingen.

Insbesondere eignen sich diese Salze zur Bekämpfung von Insekten und phytopathogenen Milben, z.B. der Ordnung Lepidoptera, Coleoptera, Homoptera, Heteroptera, Diptera, Acarina, Thysanoptera, Orthoptera, Thysanura, Isoptera, Psocoptera und Hymenoptera.

Vor allem eignen sich die Salze der Formel I zur Bekämpfung von tierparasitären Läusen, Milben und Zecken, wie z.B. Rhipicephalus, Boophilus und Amblyomma. Sie hemmen die Ablage fertiler Eier und wirken gegen alle Entwicklungsstadien.

Überraschenderweise haben die Polymeren mit Gruppen der Formel I eine bessere Stabilität und Langzeitwirkung als analoge, aus der britischen Patentschrift Nr. 1 394 990 bekannte Salze. Die Verbindungen der Formel I sind auch sicherer in der Anwendung als die freien Basen.

Die Polymeren mit Gruppen der Formel I können für sich allein oder zusammen mit geeigneten Träger- und/oder Zuschlagstoffen eingesetzt werden. Geeignete Zuschlagsstoffe können fest oder flüssig sein und entsprechen den in der Formulierungstechnik üblichen Stoffen wie z.B. natürlichen oder regenerierten Stoffen, Lösungs-, Dispergier-, Netz-, Haft-, Verdickungs-, Binde- und/oder Düngemittel.

Die Herstellung erfindungsgemässer Mittel erfolgt in an sich bekannter Weise durch inniges Vermischen und/oder Vermahlen der Salze der Formel I mit den geeigneten Trägerstoffen, gegebenenfalls unter Zusatz von gegenüber den Wirkstoffen inerten Dispergier- oder Lösungsmitteln.

Beispiel 1

218 g 3-Methyl-2-(2',4'-dimethylphenylimino)-4-thiazolin werden in 500 ml Aethanol gelöst. Unter Rühren werden 420 g des gemahlenen Kationenaustauschers "Kastel C-300 N"® eingetragen. "Kastel C-300 N" ist ein Kationenaustauscher, der durch Polymerisation von Styrol unter gleichzeitiger Vernetzung mit 8 % Divinylbenzol und anschliessender Sulfonierung hergestellt wird. Nach dem Mahlen enthält er 48 % Wasser. Seine Kapazität beträgt 4.6 mAeq.-$SO_3H$ pro Gramm wasserfreie Substanz.

Die Lösung mit dem suspendierten Ionenaustauscher wird solange gerührt, bis im Lösungsmittel kein 3-Methyl-2-(2',4'-dimethylphenylimino)-4-thiazolin mehr enthalten ist, was ca. 4 Std. dauert.

Danach wird die Suspension zentrifugiert, das überstehende Lösungsmittel abgetrennt und der Feststoff bei 60°C unter Vakuum getrocknet.

50 Teile des Trockengutes werden schliesslich mit 10 Teilen Dispergator (Sulfitzelluloseablauge und Natrium Laurylsulfat) und 40 Teilen Kaolin vermischt und fein gemahlen. Auf diese Weise wird ein Spritzpulver mit einem Gehalt von 25 % 3-Methyl-2-(2',4'-dimethylphenylimino)-4-thiazolin erhalten (WP 25).

Beispiel 2: Um ein wasserfreies System zu erhalten, wird ein Kationenaustauscher, der durch Polymerisation von Styrol unter gleichzeitiger Vernetzung mit 8 Gew. % Divinylbenzol und anschliessende Sulfonierung hergestellt wird ["Dowex HCR-S"® der Fa. Dow Chemical] gemahlen und bei 90°C im Vakuum getrocknet. Die Austauschkapazität des Ionenaustauschers beträgt 4,7 mAeq. -$SO_3H$/g.

Man löst nun 180 g 3-Methyl-2-(2',4'-dimethyl-phenylimino)-4-thiazolin in 526 g Dieselöl und trägt 180 g des getrockneten und gemahlen Kationenaustauschers portionenweise in diese Lösung ein. Zur erhaltenen Suspension werden innerhalb 15 Minuten 24 g Methanol zugetropft. Dabei setzt eine exotherme Reaktion ein. Das Reaktionsgemisch wird unter ständigem Rühren während 3 Stunden auf 50°C gehalten.

Zur Stabilisierung der Suspension werden noch 100 g Oleylpolyglykoläther und 10 g Bentone eingerührt. Die erhaltene stabile Suspension enthält pro Liter 180 g 3-Methyl-2-(2'-4'-dimethyl-phenylimino)-4-thiazolin.

Beispiel 3: Wirkung gegen Zecken

A) Rhipicephalus bursa

Je 5 adulte Zecken bzw. 50 Zeckenlarven wurden in ein Glasröhrchen gezählt und für 1 bis 2 Minuten in 2 ml einer wässrigen Emulsion aus einer Verdünnungsreihe mit je 100, 10, 1 oder 0,1 ppm Testsubstanz getaucht. Das Röhrchen wurde dann mit einem genormten Wattebausch verschlossen und auf den Kopf gestellt, damit die Wirkstoffemulsion von der Watte aufgenommen werden konnte.

Die Auswertung erfolgte bei den Adulten nach 2 Wochen und bei den Larven nach 2 Tagen. Für jeden Versuch liefen 2 Wiederholungen.

B) Boophilus microplus (Larven)

Mit einer analogen Verdünnungsreihe wie beim Test A) wurden mit je 20 sensiblen resp. OP-resistenten Larven Versuche durchgeführt. (Die Resistenz bezieht sich auf die Toleranz gegen Diazinon).
Salze gemäss dem Beispiel 1 wirkten in diesen Tests gegen Adulte und Larven von Rhipicephalus bursa und sensible resp. OP-resistente-Larven von Boophilus microplus.

Beispiel 4: Test auf Wirkung an Zecken: Eiablagehemmung

Als Testtiere werden vollgesogene Weibchen der Rinderzecke Boophilus microplus verwendet. Pro Konzentration werden je 10 Zecken eines resistenten und eines normal empfindlichen Stammes behandelt. Die Zecken werden für kurze Zeit in wässrige Emulsionen bzw. wässrige Lösungen der Salze der zu untersuchenden Verbindungen getaucht. Sie werden auf mit Doppelklebeband bezogenen Platten fixiert und in einem klimatisierten Raum bei konstanten Bedingungen aufbewahrt. Die Auswertung erfolgt nach drei Wochen. Es wird die totale Hemmung der Ablage von fertilen Eiern ermittelt.

Die Hemmwirkung der Substanzen gemäss dem Beispiel 1 erwies sich bereits bei geringen Konzentrationen voll wirksam.

Patentansprüche

1. Ein Salz gebildet von 3-Methyl-2-(2',4'-dimethyl-phenylimino)-4-thiazolin mit sulfonsäuregruppenhaltigen Polymeren der Formel

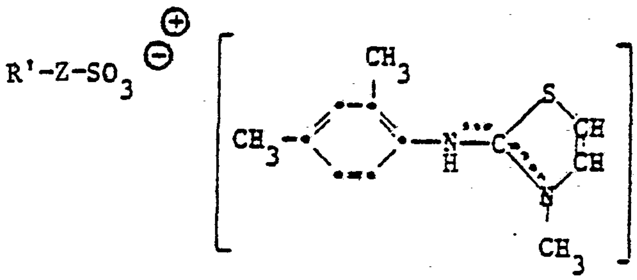 (I)

worin Z die direkte Bindung oder ein Brückenglied und R' ein Polymeres bedeuten und der Anteil des Kations mindestens 5%, bezogen auf die Anzahl der wiederkehrenden Strukturelemente des Polymeren, beträgt.

2. Ein Salz gemäss Anspruch 1 der Formel

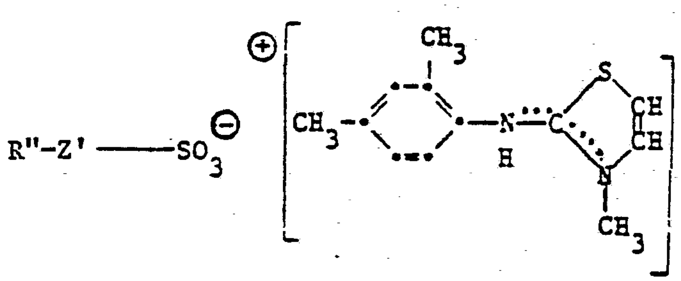 (II)

worin R'' ein Polymerglied der Formel 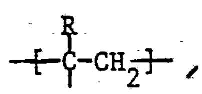,
R Wasserstoff, Chlor, -CN oder $C_1$-$C_4$-Alkyl, Z' die direkte Bindung, -O-, geradkettiges oder verzweigtes Alkylen mit 1-4 C-Atomen, gegebenenfalls durch Halogenatome, Alkyl- oder Alkoxygruppen mit 1-4 C-Atomen oder durch $-SO_3^{\ominus}M^{\oplus}$ substituiertes Phenylen oder Naphthylen, $-CH_2O-CH_2CH_2-$, $-CH_2OCH_2CH_2O-$, $-CH_2SCH_2CH_2-$, $-CH_2-S-CH_2CH_2O-$, eine gegebenenfalls durch Halogenatome, Alkyl- oder Alkoxygruppen mit 1-4 C-Atomen ringsubstituierte Gruppe

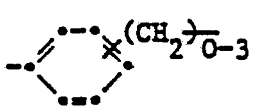 , eine gegebenenfalls durch

$-SO_3^{\ominus}M^{\oplus}$ substituierte Gruppe

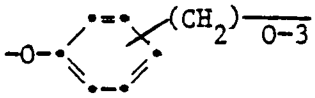 oder 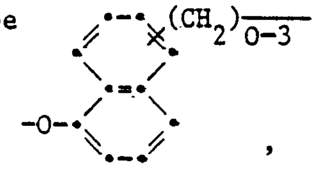 ,

$-COOR_1-$ oder $-CON(R_2)(R_3)-$, $R_1$ geradkettiges oder verzweigtes und gegebenenfalls durch Chlor- oder Bromatome substituiertes oder durch ein Sauerstoffatom unterbrochenes Alkylen mit 3-8 C-Atomen, Cyclohexylen, Phenylen, Naphthylen, durch eine Gruppe $-SO_3^{\ominus}M^{\oplus}$ substituiertes Naphthylen, $C_2$-$C_4$-Alkylen-O-Phenylen oder 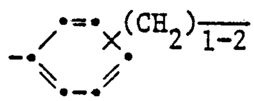

$R_2$ die direkte Bindung, gegebenenfalls durch ein Sauerstoffatom unterbrochenes geradkettiges oder verzweigtes Alkylen mit 1-6 C-Atomen, geradkettiges oder verzweigtes Oxyalkylen mit 1-6 C-Atomen, Phenylen, Naphthylen, durch eine Gruppe $-SO_3^{\ominus}M^{\oplus}$ substituiertes Naphthylen, $C_1$-$C_4$-Alkylen -O-Phenylen, 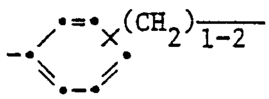 oder 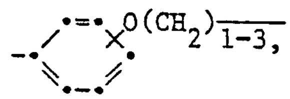

$R_3$ Wasserstoff oder $C_{1-6}$-Alkyl und $M^{\oplus}$ Wasserstoff oder [3-Methyl-2-(2',4'-dimethyl-phenylimino)-4-thiazolin]$^{\oplus}$ bedeuten,

3. Ein Salz gemäss Anspruch 2 gebildet aus dem Kation der Formel

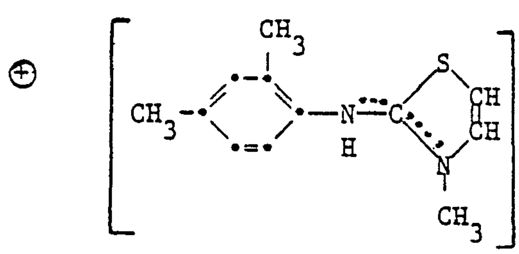

und einem Anion aus den Gruppen der Polyvinylsulfonsäuren, Polystyrolsulfonsäuren oder Poly [N-(sulfoalkyl)acrylamid] und sulfonierten Kationaustauschern aus Styrol und etwa 0,5-12 Gew. % Divinylbenzol (Vernetzter) oder sulfonierten Kationaustauschern mit makroporösen Strukturen.

4. Ein Schädlingsbekämpfungsmittel, welches als aktive Komponente ein Salz gemäss Anspruch 1 und geeignete Träger- und/oder andere Zuschlagstoffe enthält.

5. Verwendung eines Salzes gemäss Anspruch 1 zur Bekämpfung von Insekten und Vertretern der Ordnung Akarina.

6. Verwendung eines Salzes gemäss Anspruch 1 zur Bekämpfung von ektoparasitären Läusen, Milben und Zecken.